# EUROPÄISCHE PATENTSCHRIFT

(11) **EP 1 615 501 B1**
(45) Veröffentlichungstag und Bekanntmachung des Hinweises auf die Patenterteilung: **22.11.2006**
(21) Anmeldenummer: 04729425.1
(22) Anmeldetag: 26.04.2004
(51) Int. Cl.: A22B 5/08

(54) **KONDENSATIONS-BRÜHTUNNEL FÜR SCHLACHTTIERE**
CONDENSATION SCALDING TUNNEL FOR SLAUGHTER ANIMALS
TUNNEL D'ECHAUDAGE A CONDENSATION POUR ANIMAUX DE BOUCHERIE

(30) Priorität: 24.04.2003 DE 10318657
(43) Veröffentlichungstag der Anmeldung: 18.01.2006
(73) Patentinhaber: Banss Schlacht- und Fördertechnik GmbH, 35216 Biedenkopf (DE)
(72) Erfinder: BRIEL, Hermann, 35116 Hatzfeld/Eifa (DE)
(74) Vertreter: Stoffregen, Hans-Herbert
(86) Internationale Anmeldenummer: PCT/EP2004/004395
(87) Internationale Veröffentlichungsnummer: WO 2004/093552

(56) Entgegenhaltungen:
- EP-A- 0 679 335
- EP-A- 0 829 311
- DE-A- 10 016 533
- DE-A- 10 124 396
- US-A- 5 928 074

## Beschreibung

Die Erfindung bezieht sich auf einen Brühtunnel für Schlachttiere, wie Schweine oder Ziegen, mit in dem Brühtunnel und entlang Förderweg der Schlachttiere angeordneten Wasserdampf abgebenden Düsen. Ferner nimmt die Erfindung Bezug auf ein Verfahren zum Brühen von Schlachttieren wie Schweinen oder Ziegen in einem Brühtunnel, wobei in dem Brühtunnel ein Gemisch aus Wasserdampf und Wasser versprüht wird.

Einige Arten von Schlachttieren, besonders typisch Schweine, werden in einer frühen Phase des Schlachtprozesses nach dem Abstechen üblicherweise gebrüht. Durch das Brühen wird die Haut des Schlachttieres mit viel Feuchtigkeit oder Wasser aufgeweicht und erreicht üblicherweise eine Temperatur im Bereich von 55 °C bis 65 °C. Aus der gebrühten Haut lassen sich die Borsten bzw. Haare des Schlachttieres vergleichsweise leicht entfernen. Außerdem beseitigt das Brühen Schmutz, der außen an dem Schlachttier angehaftet hat.

Die traditionellste Art des Brühens war es, das jeweilige Schlachttier in ein langgestrecktes Becken mit warmem Brühwasser einzutauchen und entlang des Beckens zu bewegen. In neuerer Zeit ist man mehr zu Kondensations-Brühtunneln übergegangen, in denen die hängenden Schlachttiere sehr feuchter Luft ausgesetzt werden. Durch geeignet hohe Temperatur der Luft und durch teilweises Kondensieren der Feuchtigkeit auf dem Schlachttier wird dessen Haut in der erwünschten Weise aufgeweicht und auf die gewünschte Temperatur gebracht. Brühtunnel sind für Schlachttier-Durchlauf ausgebildet, d. h. eine Anzahl von Schlachttieren pro Zeiteinheit wird der Reihe nach durch den Brühtunnel in seiner Längsrichtung hindurchgefördert. Die Fördergeschwindigkeit der Schlachttiere durch den Brühtunnel und die Länge des Brühtunnels sind so abgestimmt, dass sich die erforderliche Verweilzeit des jeweiligen Schlachttiers in der Atmosphäre des Brühtunnels ergibt.

Bisherige Kondensations-Brühtunnel besitzen einen oder mehrere Ventilatoren, welche - jeweils über einen äußeren Umwälzkanal neben dem eigentlichen Brühtunnel - die Atmosphäre im Inneren des Brühtunnels intensiv umwälzen, damit für die zu brühenden Schlachttiere weitgehend homogene Verhältnisse herrschen und ein intensiver Wärme- und Stoffaustausch zwischen der Atmosphäre in dem Brühtunnel und den Körperoberflächen der Schlachttiere stattfindet. Bei längeren Kondensations-Brühtunneln sind - über die Brühtunnellänge verteilt - mehrere derartige Umwälzkanäle jeweils mit einem Ventilator vorhanden.

Diese Bauweise von Kondensations-Brühtunneln ist aufwendig in der Herstellung, benötigt viel Platz im Schlachthof und ist aufwendig im laufenden Energieverbrauch und in der laufenden Wartung.

Nach dem Stand der Technik ist es auch bekannt, Wasser über Zerstäuberdüsen und Dampf über Dampflanzen in einem Seitenkanal des Brühtunnels abzugeben, der seinerseits mit dem Brühtunnel verbunden ist. In dem Seitenkanal befindet sich des Weiteren ein Ventilator, um das Gemisch aus Wasser und Dampf von dem Seitenkanal in den Brühtunnel zu führen. Konstruktionsbedingt muss dabei das Gemisch aus Dampf und zerstäubtem Wasser mehrfach umgelenkt werden, wodurch ein Auskondensieren und damit ein "Trocknen" des Dampfes erfolgt. Dies führt häufig dazu, dass in dem Brühtunnel nicht die erforderliche Luftfeuchtigkeit herrscht, (vgl. Dokument DE 10124396 A1).

In einem Brühtunnel nach der US-A- 3,631,563 wird Dampf und heißes Wasser entlang des Transportweges von geschlachtetem Geflügel versprüht. Dabei wird heißes Wasser in eine zu einer Düse führende Leitung eingeleitet, über die Dampf versprüht wird.

In der US-A- 1,146,589 sind in einem Brühtunnel für Schlachttiere entlang deren Förderwegs perforierte Rohre angeordnet, um Dampf gegebenenfalls mit Kondensatgemisch zu versprühen.

In dem Brühtunnel der eingangs genannten Art entsprechend der WO 98/32334 sind im Bodenbereich Hochdruckwasserdampfdüsen angeordnet, um Schlachttiere unmittelbar zu besprühen.

Der vorliegenden Erfindung liegt das Problem zu Grunde, einen Brühtunnel der eingangs genannten Art sowie ein Verfahren zum Brühen von Schlachttieren so weiterzubilden, dass bei konstruktiv einfachem Aufbau der Brühtunnel energetischgünstig betrieben werden kann. Dabei sollen sich in dem Brühtunnel selbst homogene bzw. weitgehend homogene Umgebungsbedingungen einstellen, ohne dass aufwendige Umwälzeinrichtungen erforderlich sind.

Zur Lösung des Problems sieht ein Brühtunnel der eingangs genannten Art im Wesentlichen vor, dass die Düsen Mehrstoffdüsen mit zumindest einem Anschluss für Wasserdampf und einem Anschluss für Wasser sind, wobei die Düsen ein Gemisch von Wasserdampf und in diesem zerstäubtem Wasser abgeben.

Abweichend vom vorbekannten Stand der Technik werden Mehrstoffdüsen benutzt, denen unmittelbar Wasser und Wasserdampf zugeführt wird, um sodann über die Mehrstoffdüsen ein insbesondere übersättigtes Gemisch aus Wasser und Dampf zu versprühen. Dabei erfolgt ein Anordnen der Düsen derart, dass in dem Brühtunnel vorhandene Atmosphäre umgewälzt wird, so dass sich homogene Luftfeuchtigkeitsbedingungen ergeben. Gleichzeitig ist hierdurch die Möglichkeit gegeben, den Brühtunnel ohne Ventilatoren zu betreiben. Daher zeichnet sich die Erfindung auch durch das Merkmal aus, dass der Brühtunnel ventilatorlos betrieben werden kann.

Mit anderen Worten werden in den Brühtunnel entlang seiner Länge mehrere Mehrstoffdüsen angeordnet, die im Betrieb jeweils ein Gemisch von Wasserdampf und darin verstäubtem Wasser mit derart hoher Geschwindigkeit abgeben, dass die Atmosphäre in dem Brühtunnel umgewälzt wird.

Durch die Erfindung ist überraschend gefunden worden, dass sich mit Wasserdampf-Wasser-Mehrstoffdüsen ein derart intensiver Umwälzeffekt auf die innere Atmosphäre des Brühtunnels ausüben lässt, dass vorzugsweise ganz auf Umwälzventilatoren verzichtet werden kann, mindestens jedoch die Zahl und/oder die Leistung von Umwälzventilatoren ganz wesentlich verringert werden kann. Mittels der Wasserdampf-Wasser-Mehrstoffdüsen lässt sich mit geringem Aufwand ausreichend gute Homogenität der Atmosphäre in dem Brühtunnel und ausreichend intensiver Wärme- und Stoffübergang (Auskondensieren von Wasser) an den Körperoberflächen der in dem Brühtunnel befindlichen Schlachttiere erreichen. Der Brühtunnel ist kostengünstiger herstellbar, benötigt weniger Platz im Schlachthof, ist anspruchsloser in der Wartung und verbraucht weniger Energie für seinen Betrieb.

Vorzugsweise sind die Mehrstoffdüsen mindestens zum überwiegenden Teil, besonders bevorzugt alle Mehrstoffdüsen, im Bodenbereich des Brühtunnels angeordnet. Selbst bei dieser Anordnung reicht der durch die Mehrstoffdüsen erzeugte Umwälzeffekt aus. Die vorwiegende oder ausschließliche Anordnung im Bodenbereich vereinfacht die Leitungsführung für Wasserdampf und Wasser zu den Mehrstoffdüsen.

Vorzugsweise sind die Mehrstoffdüsen mindestens zum überwiegenden Teil, besonders bevorzugt alle, derart ausgerichtet, dass ihr Abgabestrahl mit erheblicher, besonders bevorzugt überwiegender, Komponente in Längsrichtung des Brühtunnels gerichtet ist. Auf diese Weise werden die Abstandsräume zwischen in Längsrichtung des Brühtunnels beabstandeten Mehrstoffdüsen gut mit Brühmedium (Gemisch von Wasserdampf und darin zerstäubtem Wasser) und mit Umwälzung versorgt. Alternativ oder zusätzlich ist bevorzugt, dass der Abgabestrahl mindestens des überwiegenden Teils der Mehrstoffdüsen, besonders bevorzugt aller Mehrstoffdüsen, schräg nach oben gerichtet ist. Es ist bevorzugt, wenn ein Teil der Mehrstoffdüsen mit Komponente in Förderrichtung der Schlachttiere in dem Brühtunnel ausgerichtet ist und ein anderer Teil der Mehrstoffdüsen mit Komponente entgegen der Förderrichtung der Schlachttiere in dem Brühtunnel ausgerichtet ist. Dies verringert die Zahl der Stellen, zu denen Zuleitungen für Wasserdampf und Wasser geführt werden müssen und verbessert den Umwälzeffekt.

Vorzugsweise sind in Draufsicht die Mehrstoffdüsen mindestens zum überwiegenden Teil, besonders bevorzugt alle, an nur einer Längsseite des Brühtunnels angeordnet. Vorzugsweise sind die Mehrstoffdüsen mit Komponente in Richtung zu der vertikalen Längsmittelebene des Brühtunnels ausgerichtet. Es hat sich überraschend gezeigt, dass selbst bei nur an einer Längsseite des Brühtunnels angeordneten Mehrstoffdüsen die ordnungsgemäße Funktion des Brühtunnels erreicht werden kann. Der Aufwand für die Leitungsführung zu den Düsen ist minimiert. Es ist alternativ möglich, Mehrstoffdüsen an beiden Längsseiten des Brühtunnels anzuordnen.

Unabhängig hiervon sollten die Mehrstoffdüsen in dem Brühtunnel derart angeordnet sein, dass eine direkte Beaufschlagung der Schlachttiere durch das unmittelbar aus den Mehrstoffdüsen austretende Gemisch unterbleibt. Hierdurch werden Verbrühungen ausgeschlossen.

Ein Verfahren zum Brühen von Schlachttieren der eingangs genannten Art zeichnet sich insbesondere dadurch aus, dass das Gemisch aus Wasserdampf und Wasser über unmittelbar in dem Brühtunnel angeordnete Mehrstoffdüsen versprüht wird, denen unmittelbar sowohl Wasser als auch Wasserdampf zugeführt werden. Dabei wird insbesondere über die Mehrstoffdüsen ein übersättigtes Gemisch aus Wasser und Wasserdampf versprüht.

Des Weiteren ist vorgesehen, dass das über die Mehrstoffdüsen versprühte Gemisch derart temperaturmäßig eingestellt wird, dass das Gemisch bei Austritt aus der Mehrstoffdüse eine Temperatur T₁ mit T₁ > 100 °C, insbesondere T₁ > 120 °C, vorzugsweise 120 °C ≤ T₁ ≤ 160 °C aufweist.

Nach einer Weiterbildung der Erfindung ist vorgesehen, dass das über die Mehrstoffdüsen versprühte Gemisch derart temperaturmäßig eingestellt wird und/oder die Mehrstoffdüsen derart in dem Brühtunnel angeordnet werden, dass das auf die Schlachttiere auftreffende Gemisch eine Temperatur T₂ mit insbesondere 55 °C ≤ T₂ ≤ 70 °C aufweist.

Vorzugsweise werden die Mehrstoffdüsen mindestens zum überwiegenden Teil, besonders bevorzugt alle, mit Dampf von 0,5 bar Absolutdruck bis 10 bar Überdruck, besonders bevorzugt 2 bar bis 6 bar Überdruck, versorgt. Mit derartigen Überdrücken kann man technisch problemlos umgehen. Auch bei kleinen Austrittsquerschnitten für den Dampf in den Mehrstoffdüsen und bei einer wünschenswert kleinen Anzahl von Mehrstoffdüsen für den gesamten Brühtunnel lässt sich die erforderliche Dampfmenge in den Brühtunnel einbringen.

Vorzugsweise werden die Mehrstoffdüsen mindestens zum überwiegenden Teil besonders bevorzugt alle, mit Dampf von 80 °C bis 200 °C, vorzugsweise 120 °C bis 160 °C, versorgt. Derartige Temperaturen sind technisch problemlos handhabbar und führen bei gut handhabbarer Dampfmenge zu der erforderlichen Energiezufuhr in das Innere des Brühtunnels.

Vorzugsweise werden die Mehrstoffdüsen mindestens zum überwiegenden Teil, besonders bevorzugt alle, mit gesättigtem oder (leicht) übersättigtem Dampf versorgt. Wenn der Dampf aus den Mehrstoffdüsen ausgetreten ist und auf etwa Umgebungsdruck entspannt ist und infolge der Einbringung von fein zerstäubtem Wasser in den Wasserdampf, ergibt sich eine starke Übersättigung der Atmosphäre in dem Brühtunnel. Infolge dessen wird Wasser bevorzugt dort in dem Brühtunnel auskondensieren, wo sich ein Gegenstand befindet, der niedrigere Temperatur als andere dortige Gegenstände hat; solche relativ kalten "Gegenstände" werden in erster Linie die neu in den Brühtunnel eingeförderten Schlachttiere und etwaige kältere Zonen der Schlachttierkörperoberflächen sein.

Vorzugsweise werden die Mehrstoffdüsen mindestens zum überwiegenden Teil, besonders bevorzugt alle, mit 0,1 bar bis 4 bar Wasser, besonders bevorzugt mit Wasser von 0,2 bis 2 bar, versorgt. Vorzugsweise werden die Mehrstoffdüsen mindestens zum überwiegenden Teil, besonders bevorzugt alle, mit 10 °C bis 90 °C, besonders bevorzugt mit Wasser von 20 °C bis 70°C, versorgt. Je wärmer das Wasser ist, desto besser lässt es sich zerstäuben; der Temperaturunterschied zu dem Dampf ist nicht so groß. In aller Regel wird der Brühtunnel so ausgeführt, dass der Dampf mit höherem Druck als das Wasser den Mehrstoffdüsen zugeführt wird.

Die Menge an Wasserdampf und an Wasser, die über die Mehrstoffdüsen in den Brühtunnel abgegeben werden, hängen im Wesentlichen von folgenden Parametern ab: Überdruck bei der Zuführung zu den Düsen, Strömungsquerschnitte in den Düsen, Anzahl der Düsen. Wenn den Düsen gesättigter Dampf zugeführt wird, hängen dessen Druck und dessen Temperatur nach dem bekannten Zustandsdiagramm miteinander zusammen.

Vorzugsweise ist eine Mengenregelung für die den Mehrstoffdüsen zugeführte Dampfmenge vorgesehen. Vorzugsweise ist eine Mengenregelung für die den Mehrstoffdüsen zugeführte Wassermenge vorgesehen. "Mengenregelung" heißt in den meisten Fällen, dass durch die Regelung die Menge pro Zeiteinheit konstant gehalten wird. Dies schließt selbstverständlich nicht aus, dass diese Menge einstellbar ist, was sogar bevorzugt ist. Die genannten Mengenregelungen können für alle Mehrstoffdüsen gemeinsam sein, alternativ jeweils nur für eine Untergruppe der Mehrstoffdüsen gemeinsam sein.

Der Brühtunnel weist vorzugsweise eine Temperaturregelung auf. Besonders bevorzugt ist es, die Temperaturregelung durch Verändern der insgesamt in den Brühtunnel eingebrachten Dampfmenge pro Zeiteinheit vorzunehmen. Zu diesem Zweck kann man mittels der Temperaturregelungseinrichtung auf alle Mehrstoffdüsen zugreifen, alternativ nur auf eine Teilanzahl der Mehrstoffdüsen. Man kann mit Stellventilen in der Dampfzuführung zu den Mehrstoffdüsen arbeiten, und zwar entweder mit einem einzigen Stellventil für alle zu regelnden Mehrstoffdüsen, oder mit einem Stellventil für eine Teilanzahl von zu regelnden Mehrstoffdüsen, oder mit jeweils einem Stellventil pro zu regelnde Mehrstoffdüse.

Ein erfindungsgemäßer Brühtunnel kann auch dadurch hergestellt werden, dass man einen existierenden Wasser-Brühtunnel (warmes Brühwasser wird brausenartig über die Schlachttiere gesprüht) auf die Mehrstoffdüsen umgebaut.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von der Zeichnung zu entnehmenden bevorzugten Ausführungsbeispielen.

Es zeigen:
- Fig. 1: einen Kondensations-Brühtunnel im vertikalen Querschnitt,
- Fig. 2: den Brühtunnel von Fig. 1 im horizontalen Längsschnitt gemäß II-II, in kleinerem Maßstab als Fig. 1,
- Fig. 3a: eine Mehrstoffdüse in seitlicher Ansicht und
- Fig. 3b: die Mehrstoffdüse von Fig. 3a in seitlicher Ansicht, aber nach Drehung der Mehrstoffdüse um ihre Längsachse um 90°.

Die Erfindung wird nachstehend anhand eines rein prinzipiell dargestellten Brühtunnels näher erläutert. Dabei wird der Begriff Zweistoffdüse benutzt. Hierbei handelt es sich um einen Unterfall einer Mehrstoffdüse, der mehr als zwei Medienströme gleichzeitig zugeführt werden können. Unabhängig hiervon leisten sowohl Zweistoff- als auch Mehrstoffdüsen funktional das erfindungsgemäße Zusammenführen eines Wasserdampfstroms und eines Stroms aus verstäubtem Wasser.

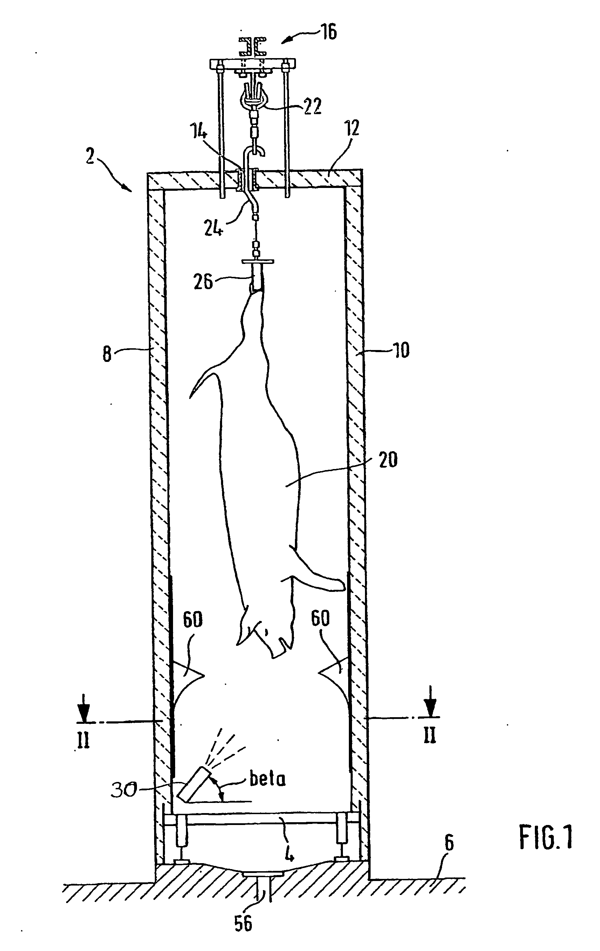

Ein in Fig. 1 dargestellter Brühtunnel 2 für Schweine besteht im Wesentlichen aus einem Untergestell 4, welches auf einem Schlachthofboden 6 aufgestellt ist, zwei seitlichen Wänden 8 und 10, einer Decke 12 mit einem Längsschlitz 14 und einem zugeordneten Abschnitt einer Förderbahn 16. Die Förderrichtung der Schlachttiere 20 verläuft rechtwinklig zur Zeichnungsebene der Fig. 1.

Die Seitenwände 8, 10 und die Decke 12 sind jeweils doppelwandig aus zwei Edelstahlblechen mit zwischendrin verlaufender Wärmedämmung ausgeführt. Der Förderbahnabschnitt 16 ist ein Abschnitt einer konventionellen Förderbahn mit einer in der Zeichnung nicht gesondert erkennbaren Transportkette, die über Mitnehmer einzelne Rollwagen 22 mitnimmt, an denen jeweils ein Haken 24 hängt, an welchem über eine Schlingkette 26 ein Schlachttier 20 hängt. Dabei greift die Schlingkette 26 ein Hinterbein des Schlachttieres 20. Der Haken 24 durchsetzt den Schlitz 14, so dass sich der Förderbahnabschnitt 16 oberhalb und außerhalb des eigentlichen Brühtunnels 2 befindet und dennoch die Schlachttiere in Längsrichtung des Brühtunnels 2 gefördert werden können. Vor der Zeichnungsebene der Fig. 1 und hinter der Zeichnungsebene der Fig. 1 muss man sich weitere Schlachttiere 20 vorstellen, so dass eine ganze Reihe von Schlachttieren 20 gleichzeitig durch den Brühtunnel 2 gefördert wird.

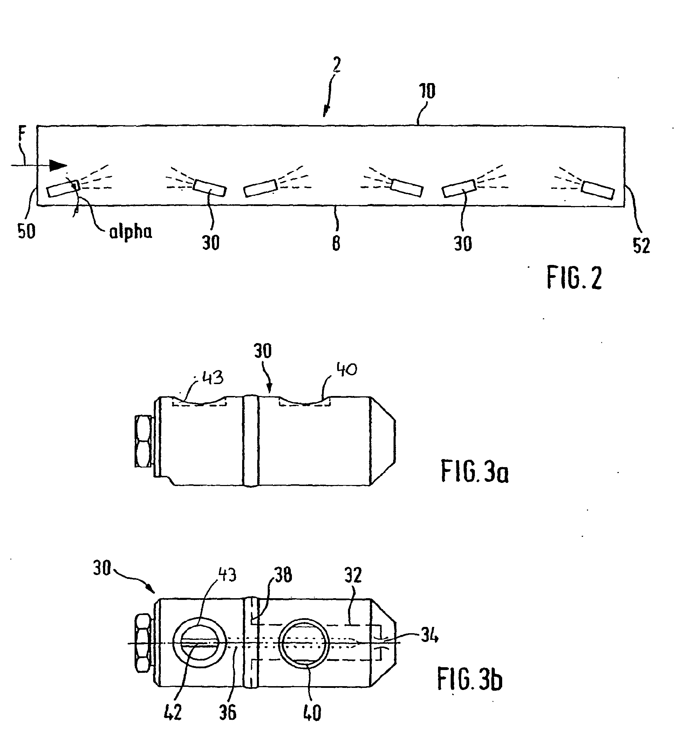

In Fig. 2 ist die Förderrichtung F mit einem Pfeil eingezeichnet. Die Längsrichtung des Brühtunnels ist von links nach rechts in Fig. 2. Die Länge des Brühtunnels 2 beträgt z.B. 10 m, die Breite z. B. in etwa 1 m. Durch diese Zahlen erfolgt jedoch eine Beschränkung der erfindungsgemäßen Lehre nicht.

In Fig. 2 sieht man, dass der Brühtunnel 2 insgesamt mit sechs Mehrstoffdüsen 30 - im Folgenden kurz "Düse 30" genannt - ausgerüstet ist. Ziemlich dicht am Anfang 50 des Brühtunnels 2 ist die erste Düse 30 positioniert, gerichtet zum Inneren des Brühtunnels. Sie ist z. B. ausgerichtet mit einem Winkel alpha, gemessen in der Horizontalebene relativ zu der Längsrichtung des Brühtunnels 2, von 5° bis 15°, und einem Winkel beta, gemessen in einer Vertikalebene und relativ zur Horizontalen, von 30° bis 50°.

In etwa 3 m Abstand von der ersten Düse 30 befindet sich ein Paar von Düsen 30, und zwar eine Düse 30 ausgerichtet entgegen der Förderrichtung F und die andere Düse 30 ausgerichtet in Förderrichtung F. Die Winkelausrichtungen dieser zwei Düsen sind analog bzw. spiegelbildlich zu den beschriebenen Winkelausrichtungen der ersten Düse 30. Wiederum in einem Abstand von etwa 3 m folgt ein weiteres Paar von Düsen 30, analog dem zuvor beschriebenen Paar von Düsen 30. Kurz vor dem Austrittsende 52 des Brühtunnels 2 ist eine letzte Düse 30 positioniert, gerichtet entgegen der Förderrichtung F in das Innere des Brühtunnels 2 hinein; die Winkelausrichtungen sind spiegelbildlich zu der ersten Düse 30.

Unabhängig hiervon sind die Winkel alpha und beta derart zu wählen, dass der Austrittsstrahl der Mehrstoffdüsen nicht direkt auf die Schlachttiere 20 trifft.

Jede der Düsen 30 ist angeschlossen an eine erste Leitung für Wasserdampf und eine zweite Leitung für Wasser, wobei diese Leitungen zur Erhöhung der Übersichtlichkeit in Fig. 1 und Fig. 2 nicht eingezeichnet sind.

Fig. 2 führt vor Augen, dass alle Düsen 30 an einer einzigen Längsseite 54 des Brühtunnels 2 positioniert sind. Infolge dessen sind die Positionierung der angesprochenen Leitungen und deren Einbau bei der Herstellung des Brühtunnels 2 äußerst einfach. In Fig. 1 erkennt man, dass die Düsen 30 im Bodenbereich des Brühtunnels 2, also nicht weit entfernt vom unteren Ende der betreffenden Seitenwand 10 angeordnet sind. In Fig. 1 erkennt man auch, dass der untere Abschluss des Brühtunnels 2 als rinnenartige Vertiefung mit einem oder mehreren Ablaufrohren 56 gestaltet ist, so dass Wasser, welches auf den Schlachttieren 20 oder auch an den Innenseiten der Wände 8, 10 kondensiert ist, nach unten ablaufen kann.

Die in Fig. 3a und 3b genauer gezeichnete Düse 30 weist in ihrem in Fig. 3a und 3b rechten Teil einen inneren, zylindrischen Strömungskanal 32 auf, der in unterbrochenen Linien eingezeichnet ist. Am in Fig. 3a und 3b rechten Ende ist der Strömungskanal 32 durch eine Wand abgeschlossen, die zentral eine schematisiert eingezeichnete Öffnung 34 kleinen Durchmessers enthält. Am in Fig. 3a und 3b linken Ende ist der Strömungskanal 32, mit Ausnahme einer noch zu beschreibenden Nadel 36, offen. Am linken Ende ist das Strömungskanalteil mittels einer Scheibe 38 in der Düse 30 gehalten. Eine radiale Bohrung 40 stellt die Verbindung zwischen einer dort angeschraubten, nicht gezeichneten Leitung, über die Wasserdampf zugeführt wird, und einem Ringraum zwischen dem Strömungskanal-Bauteil und dem zylindrischen Umgrenzungsrand des Gesamt-Düsen-Bauteils 30 her.

Die Nadel 36, eingezeichnet in gepunkteten Linien in Fig. 3b, erstreckt sich längs der Mittelachse 42 der Düse 30, und zwar vom in Fig. 3a und 3b linken Ende aus bis ein Stück vor die Ausströmöffnung 34 des Strömungskanals 32. Am linken Ende ist die Nadel 36 im Durchmesser vergrößert und mit Gewinde versehen, so dass sie von links her in das Gesamt-Düsen-Bauteil 30 eingeschraubt werden konnte. Im rechten Endbereich ist die Nadel 36 für einen Großteil derjenigen Teillänge, die sich innerhalb des Strömungskanals 32 befindet, mit einer äußeren Wendel großer Steigung versehen (nicht eingezeichnet). Eine radiale Bohrung 43 stellt eine Verbindung zwischen einer dort angeschraubten, nicht eingezeichneten Leitung, über die Wasser zugeführt wird, und dem Inneren des linken Teilbereichs der Düse 30 her. Dieser Innenraum ist offen zum Inneren des Strömungskanals 32.

Fig. 3a und 3b zeigen die Düse in einer Größe, die gegenüber der natürlichen Größe leicht verkleinert ist.

Die beschriebene Düse 30 erzeugt ein intensives Gemisch von Wasserdampf mit sehr fein darin zerstäubtem Wasser, quasi ein Wasseraerosol im Dampf. Der Wasserdampf strömt mit hoher Geschwindigkeit durch den Ringraum zwischen dem Strömungskanal 32 und der Umgrenzungswand der Düse 30. Die hohe Strömungsgeschwindigkeit zieht eine Verringerung des statischen Drucks an der Öffnung 34 nach sich (Venturi-Effekt). Die beschriebene Wendel-Formgebung auf der Nadel 36 bewirkt eine Drallströmung des Wassers in dem Strömungskanal 32. Die Öffnung bzw. Bohrung 34 hat typischerweise einen Durchmesser von 1 mm bis 5 mm. Die in dem Wasserdampf zerstäubten Wassertröpfchen haben eine Größe im µm-Bereich.

Bevorzugterweise weist der der Zweistoffdüse 30 zugeführte Dampf eine Restfeuchte von 20 % bis 30 %, insbesondere im Bereich von 25 % auf. Der Druck, mit dem der Dampf der Zweistoffdüse 30 zugeführt wird, liegt bevorzugterweise im Bereich zwischen 2 bar bis 10 bar über Atmosphärendruck, insbesondere 4 bar.

Durch das der Zweistoffdüse zugeführte Wasser und dessen Verstäubung durch die Zweistoffdüse 30 weist das die Düse 30 verlassende Gemisch aus Wasserdampf und zerstäubtem Wasser eine Restfeuchte im Bereich zwischen 50 % und 70 %, insbesondere in etwa 60 % auf. Dabei hängt der Betrag der Restfeuchte davon ab, mit welcher Temperatur und Menge das Wasser der Zweistoffdüse zugeführt wird. Insbesondere sollte die Wassertemperatur zwischen 40 °C und 90 °C liegen.

Des Weiteren ist darauf hinzuweisen, dass durch das Zerstäuben des Dampfes durch die Zweistoffdüse 30 eine Entspannung auf Atmosphärendruck erfolgt.

Es wird betont, dass es alternativ möglich ist, Düsen 30 an beiden Längsseiten des Brühtunnels 2 anzuordnen. Ferner wird betont, dass es alternativ möglich ist, Düsen 30 statt im Bodenbereich auch weiter oben im Innenraum des Brühtunnels 2 anzuordnen oder weiter oben im Innenraum des Brühtunnels zwei zusätzliche Düsen 30 vorzusehen. Insgesamt ist es möglich, Düsen 30 gezielt dort zu positionieren und so auszurichten, wo sich schwierig aufzuweichende Körperpartien der Schlachttiere befinden.

Die in Fig. 1 sichtbaren, längsverlaufenden Ansätze 60 innen an den Seitenwänden 8, 10 verbessern die Verwirbelung des Brühmediums (Wasserdampf mit darin zerstäubtem Wasser) im Innenraum des Brühtunnels 2 und leiten überdies kondensiertes Wasser, welches an den Seitenwänden 8,10 hinabläuft, mehr zur Mitte des Brühtunnels 2.

## Patentansprüche

1. Brühtunnel (2) für Schlachttiere (20), wie Schweine oder Ziegen, mit in dem Brühtunnel und entlang Förderweg (F) der Schlachttiere angeordneten Wasserdampf abgebenden Düsen (30),
**dadurch gekennzeichnet,**
**dass** die Düsen (30) Mehrstoffdüsen mit zumindest einem Anschluss (40) für Wasserdampf und einen Anschluss (43) für Wasser sind, wobei die Düsen ein Gemisch von Wasserdampf und in diesem zerstäubtem Wasser abgeben.

2. Brühtunnel nach Anspruch 1,
**dadurch gekennzeichnet,**
**dass** die Mehrstoffdüsen (30) derart in dem Brühtunnel (2) angeordnet sind, dass in dem Brühtunnel vorhandene Atmosphäre umwälzbar ist.

3. Brühtunnel nach Anspruch 1 oder 2,
**dadurch gekennzeichnet,**
**dass** die Mehrstoffdüsen (30) mindestens zum überwiegenden Teil im Bodenbereich des Brühtunnels (2) angeordnet sind.

4. Brühtunnel nach zumindest einem der vorhergehenden Ansprüche,
**dadurch gekennzeichnet,**
**dass** die Mehrstoffdüsen (30) mindestens zum überwiegenden Teil derart ausgerichtet sind, dass ihr Abgabestrahl mit erheblicher Komponente in Längsrichtung des Brühtunnels (2) gerichtet ist.

5. Brühtunnel nach zumindest einem der vorhergehenden Ansprüche,
**dadurch gekennzeichnet,**
**dass** ein Teil der Mehrstoffdüsen (30) mit Komponente in Förderrichtung (F) der Schlachttiere (20) in dem Brühtunnel ausgerichtet ist und ein anderer Teil der Mehrstoffdüsen (30) mit Komponente entgegen der Förderrichtung (F) der Schlachttiere (20) in dem Brühtunnel (2) ausgerichtet ist.

6. Brühtunnel nach zumindest einem der vorhergehenden Ansprüche,
**dadurch gekennzeichnet,**
**dass** in Draufsicht die Mehrstoffdüsen (30) mindestens zum überwiegenden Teil an einer Längsseite des Brühtunnels (2) angeordnet sind.

7. Brühtunnel nach zumindest einem der vorhergehenden Ansprüche,
**dadurch gekennzeichnet,**
**dass** eine Mengenregelung für die den Mehrstoffdüsen (30) zugeführte Dampfmenge vorgesehen ist.

8. Brühtunnel nach zumindest einem der vorhergehenden Ansprüche,
**dadurch gekennzeichnet,**
**dass** eine Mengenregelung für die den Mehrstoffdüsen (30) zugeführte Wassermenge vorgesehen ist.

9. Brührunnel nach zumindest einem der vorhergehenden Ansprüche,
**dadurch gekennzeichnet,**
**dass** zur Temperaturregelung mindestens ein Stellventil für die mindestens einer Mehrstoffdüse (30) zugeführte Dampfmenge vorgesehen ist.

10. Brühtunnel nach zumindest einem der vorhergehenden Ansprüche,
**dadurch gekennzeichnet,**
**dass** nur ein Teil der Mehrstoffdüsen (30) in die Temperaturregelung eingebunden ist.

11. Brühtunnel nach zumindest einem der vorhergehenden Ansprüche,
**dadurch gekennzeichnet,**
**dass** alle Mehrstoffdüsen (30) in die Temperaturregelung eingebunden sind.

12. Brühtunnel nach zumindest einem der vorhergehenden Ansprüche,
**dadurch gekennzeichnet,**
**dass** der Brühtunnel (2) ohne Ventilatoren zur Umwälzung seiner inneren Atmosphäre ausgeführt ist.

13. Brühtunnel nach zumindest einem der vorhergehenden Ansprüche,
**dadurch gekennzeichnet,**
**dass** die Mehrstoffdüse (30) eine Zweistoffdüse ist.

14. Brühtunnel nach zumindest einem der vorhergehenden Ansprüche,
**dadurch gekennzeichnet,**
**dass** die Mehrstoffdüse (30) derart zur Horizontalen ausgerichtet ist, dass deren Längsaustrittsrichtung zu der Horizontalen einen Winkel α mit insbesondere 5° ≤ α ≤ 15° beschreibt.

15. Brühtunnel nach zumindest einem der vorhergehenden Ansprüche,
**dadurch gekennzeichnet,**
**dass** die Mehrstoffdüse (30) mit ihrer Längsaustrittsrichtung zur Vertikalen einen Winkel β mit vorzugsweise 30° ≤ β ≤ 50° beschreibt.

16. Verfahren zum Brühen von Schlachttieren wie Schweinen oder Ziegen in einem Brühtunnel (2), wobei in dem Brühtunnel ein Gemisch aus Wasserdampf und Wasser versprüht wird,
**dadurch gekennzeichnet,**
**dass** das Gemisch aus Wasserdampf und Wasser über unmittelbar in dem Brühtunnel (2) angeordnete Mehrstoffdüsen (30) versprüht wird, denen unmittelbar sowohl Wasser als auch Wasserdampf zugeführt wird.

17. Verfahren nach Anspruch 16,
**dadurch gekennzeichnet,**
**dass** über die Mehrstoffdüsen (30) ein übersättigtes Gemisch aus Wasser und Wasserdampf versprüht wird.

18. Verfahren nach Anspruch 16 oder 17,
**dadurch gekennzeichnet,**
**dass** das über die Mehrstoffdüsen (30) versprühte Gemisch derart temperaturmäßig eingestellt wird, dass das Gemisch bei Austritt aus den Mehrstoffdüsen eine Temperatur T₁ mit T₁ ≥ 100 °C, insbesondere T₁ ≥ 120°C, vorzugsweise 120°C ≤ T₁ ≤ 160 °C aufweist.

19. Verfahren nach einem der Ansprüche 16 bis 18,
**dadurch gekennzeichnet,**
**dass** das über die Mehrstoffdüsen (30) versprühte Gemisch derart temperaturmäßig eingestellt wird und/oder die Mehrstoffdüsen derart in dem Brühtunnel (2) angeordnet werden, dass das auf das Schlachttier (20) auftreffende Gemisch eine Temperatur T₂ mit insbesondere 55 °C ≤ T₂ ≤ 70 °C aufweist.

20. Verfahren nach einem der Ansprüche 16 bis 19,
**dadurch gekennzeichnet,**
**dass** die Mehrstoffdüsen (30) derart in dem Brühtunnel (2) angeordnet werden, dass eine Umwälzung der in dem Brühtunnel vorhandenen Atmosphäre in einem Umfang erfolgt, dass in dem Brühtunnel homogene oder im Wesentlichen homogene Luftfeuchtigkeitsbedingungen herrschen.

21. Verfahren nach einem der Ansprüche 16 bis 20,
**dadurch gekennzeichnet,**
**dass** der Brühtunnel (2) ventilatorlos betrieben wird.

22. Verfahren nach einem der Ansprüche 16 bis 21,
**dadurch gekennzeichnet,**
**dass** die Mehrstoffdüsen (30) mindestens zum überwiegenden Teil mit Dampf von 2 bar bis 6 bar Überdruck versorgt werden.

23. Verfahren nach einem der Ansprüche 16 bis 22,
**dadurch gekennzeichnet,**
**dass** die Mehrstoffdüsen (30) mindestens zum überwiegenden Teil mit Dampf von 120 °C bis 160 °C versorgt werden.

24. Verfahren nach einem der Ansprüche 16 bis 23,
**dadurch gekennzeichnet,**
**dass** die Mehrstoffdüsen (30) mindestens zum überwiegenden Teil mit gesättigtem oder übersättigtem Dampf versorgt werden.

25. Verfahren nach einem der Ansprüche 16 bis 24,
**dadurch gekennzeichnet,**
**dass** die Mehrstoffdüsen (30) mindestens zum überwiegenden Teil mit Wasser von in etwa 0,2 bar Überdruck versorgt werden.

26. Verfahren nach einem der Ansprüche 16 bis 25,
**dadurch gekennzeichnet,**
**dass** die Zweistoffdüsen (30) mindestens zum überwiegenden Teil mit Wasser einer Temperatur von 20 °C bis 70 °C versorgt werden.

## Claims

1. A scalding tunnel (2) for slaughter animals (20), such as pigs or goats, with steamdischarging nozzles (30) mounted in the scalding tunnel and along the path of conveyance (F) of the slaughter animals,
**characterized in**
**that** the nozzles (30) are multicomponent nozzles with at least one connection (40) for steam and one connection (43) for water, whereby the nozzles discharge a mixture of steam and water that is sprayed therein.

2. The scalding tunnel according to claim 1,
**characterized in**
**that** the multicomponent nozzles (30) are arranged in the scalding tunnel (2) in such a way that atmosphere present in the scalding tunnel can be circulated.

3. The scalding tunnel according to claim 1 or 2,
**characterized in**
**that** the multicomponent nozzles (30) are arranged, at least for the most part, in the base area of the scalding tunnel (2).

4. The scalding tunnel according to at least one of the preceding claims,
**characterized in**
**that** the multicomponent nozzles (30) are oriented, at least for the most part, in such a way that their discharge jet is directed with a substantial component longitudinally of the scalding tunnel (2).

5. The scalding tunnel according to at least one of the preceding claims,
**characterized in**
**that** one part of the multicomponent nozzles (30) is directed with component in the direction of conveyance (F) of the slaughter animals (20) in the scalding tunnel (2) and another part of the multicomponent nozzles (30) is directed with component opposite to the direction of conveyance (F) of the slaughter animals (20) in the scalding tunnel (2).

6. The scalding tunnel according to at least one of the preceding claims,
**characterized in**
**that** in plan view, the multicomponent nozzles (30) are arranged, at least for the most part, on one longitudinal side of the scalding tunnel (2),.

7. The scalding tunnel according to at least one of the preceding claims,
**characterized in**
**that** a volume control is provided for the amount of steam supplied to the multicomponent nozzles (30).

8. The scalding tunnel according to at least one of the preceding claims,
**characterized in**
**that** a volume control is provided for the amount of water supplied to the multicomponent nozzles (30).

9. The scalding tunnel according to at least one of the preceding claims,
**characterized in**
**that** for temperature control at least one control valve is provided for the amount of steam supplied to at least one multicomponent nozzle (30).

10. The scalding tunnel according to at least one of the preceding claims,
**characterized in**
**that** only a part of the multicomponent nozzles (30) is included in the temperature control.

11. The scalding tunnel according to at least one of the preceding claims,
**characterized in**
**that** all the multicomponent nozzles (30) are included in the temperature control.

12. The scalding tunnel according to at least one of the preceding claims,
**characterized in**
**that** the scalding tunnel (2) is designed without ventilators for circulating its internal atmosphere.

13. The scalding tunnel according to at least one of the preceding claims,
**characterized in**
**that** the multicomponent nozzle (30) is a dual component nozzle.

14. The scalding tunnel according to at least one of the preceding claims,
**characterized in**
**that** the multicomponent nozzle (30) is oriented to the horizontal in such a way that its direction of longitudinal discharge, relative to the horizontal, describes an angle α, where in particular 5° ≤ α ≤ 15°.

15. The scalding tunnel according to at least one of the preceding claims,
**characterized in**
**that** the multicomponent nozzle (30) describes an angle β relative to the vertical with its direction of longitudinal discharge, where preferably 30° ≤ β ≤ 50°.

16. A method for scalding slaughter animals such as pigs or goats in a scalding tunnel (2), whereby a mixture of steam and water is sprayed in the scalding tunnel,
**characterized in**
**that** the mixture of steam and water is sprayed through multicomponent nozzles (30) arranged directly in the scalding tunnel (2) and to which both water and steam are directly supplied.

17. The method according to claim 16,
**characterized in**
**that** a supersaturated mixture of water and steam is sprayed through the multicomponent nozzles (30).

18. The method according to claim 16 or 17,
**characterized in**
**that** the temperature of the mixture sprayed through the multicomponent nozzles (30) is set such that, on discharge from the multicomponent nozzles, the mixture has a temperature T₁, where T₁ ≥ 100° C, in particular T₁ ≥ 120° C, preferably 120° C ≤ T₁ ≤ 160° C.

19. The method according to one of the claims 16 to 18,
**characterized in**
**that** the temperature of the mixture sprayed through the multicomponent nozzles (30) is set, and/or the multicomponent nozzles are arranged in the scalding tunnel (2), such that the mixture striking the slaughter animal (20) has a temperature T₂, where in particular 55° C ≤ T₂ ≤ 70° C.

20. The method according to one of the claims 16 to 19,
**characterized in**
**that** the multicomponent nozzles (30) are arranged in the scalding tunnel (2) in such a way that a circulation of the atmosphere present in the scalding tunnel is effected to such a degree that homogeneous or substantially homogeneous humidity conditions prevail in the scalding tunnel.

21. The method according to one of the claims 16 to 20,
**characterized in**
**that** the scalding tunnel (2) is operated without ventilators.

22. The method according to one of the claims 16 to 21,
**characterized in**
**that** the multicomponent nozzles (30) are supplied, at least for the most part, with steam at 2 bar to 6 bar superatmospheric pressure.

23. The method according to one of the claims 16 to 22,
**characterized in**
**that** the multicomponent nozzles (30) are supplied, at least for the most part, with steam at 120° C to 160° C.

24. The method according to one of the claims 16 to 23,
**characterized in**
**that** the multicomponent nozzles (30) are supplied, at least for the most part, with saturated or supersaturated steam.

25. The method according to one of the claims 16 to 24,
**characterized in**
**that** the multicomponent nozzles (30) are supplied, at least for the most part, with water at about 0.2 bar superatmospheric pressure.

26. The method according to one of the claims 16 to 25,
**characterized in**
**that** the dual component nozzles (30) are supplied, at least for the most part, with water having a temperature of 20° C to 70° C.

## Revendications

1. Tunnel d'échaudage (2) pour animaux de boucherie (20) tels que des cochons ou des chèvres, comprenant des buses (30) diffusant de la vapeur d'eau disposées dans le tunnel d'échaudage et le long du chemin de transport (F) des animaux de boucherie,
**caractérisé en ce que**
les buses (30) sont des buses multiphasiques avec au moins un branchement (40) pour la vapeur d'eau et un branchement (43) pour l'eau, les buses diffusant un mélange de vapeur d'eau et d'eau pulvérisée dans celle-ci.

2. Tunnel d'échaudage selon la revendication 1,
**caractérisé en ce que**
les buses multiphasiques (30) sont disposées dans le tunnel d'échaudage (2) pour permettre la circulation de l'atmosphère dans le tunnel d'échaudage.

3. Tunnel d'échaudage selon la revendication 1 ou 2,
**caractérisé en ce qu'**
au moins la plupart des buses multiphasiques (30) sont disposées dans la zone de fond du tunnel d'échaudage (2).

4. Tunnel d'échaudage selon au moins l'une des revendications précédentes,
**caractérisé en qu'**
au moins la plupart des buses multiphasiques (30) sont configurées de sorte qu'une composante considérable de leur jet d'éjection soit orientée dans la direction longitudinale du tunnel d'échaudage (2).

5. Tunnel d'échaudage selon au moins l'une des revendications précédentes,
**caractérisé en ce qu'**
une partie des buses multiphasiques (30) est orientée avec une composante dans la direction de transport (F) des animaux de boucherie (20) dans le tunnel d'échaudage, et une autre partie des buses multiphasiques (30) est orientée avec une composante opposée à la direction de transport (F) des animaux de boucherie (20) dans le tunnel d'échaudage (2).

6. Tunnel d'échaudage selon au moins l'une des revendications précédentes,
**caractérisé en ce qu'**
en vue de dessus, au moins la plupart des buses multiphasiques (30) sont disposées sur un côté longitudinal du tunnel d'échaudage (2).

7. Tunnel d'échaudage selon au moins l'une des revendications précédentes,
**caractérisé en ce qu'**
une régulation de débit est prévue pour la quantité de vapeur amenée aux buses multiphasiques (30).

8. Tunnel d'échaudage selon au moins l'une des revendications précédentes,
**caractérisé en ce qu'**
une régulation de débit est prévue pour la quantité d'eau amenée aux buses multiphasiques (30).

9. Tunnel d'échaudage selon au moins l'une des revendications précédentes,
**caractérisé en ce qu'**
au moins une soupape de réglage de température est prévue pour la quantité de vapeur amenée vers au moins une buse multiphasique (30).

10. Tunnel d'échaudage selon au moins l'une des revendications précédentes,
**caractérisé en ce qu'**
une partie seulement des buses multiphasiques (30) est intégrée dans la régulation de température.

11. Tunnel d'échaudage selon au moins l'une des revendications précédentes,
**caractérisé en ce que**
toutes les buses multiphasiques (30) sont intégrées dans la régulation de température.

12. Tunnel d'échaudage selon au moins l'une des revendications précédentes,
**caractérisé en ce que**
le tunnel d'échaudage (2) est réalisé sans ventilateurs pour la circulation de son atmosphère intérieure.

13. Tunnel d'échaudage selon au moins l'une quelconque des revendications précédentes,
**caractérisé en ce que**
la buse multiphasique (30) est une buse à deux matières.

14. Tunnel d'échaudage selon au moins l'une des revendications précédentes,
**caractérisé en ce que**
la direction de sortie longitudinale de la buse mixte (30) fait un angle α en particulier de 5° ≤ α ≤ 15° par rapport à l'horizontale.

15. Tunnel d'échaudage selon au moins l'une des revendications précédentes,
**caractérisé en ce que**
la direction de sortie longitudinale de la buse multiphasique mixte (30) fait un angle β de préférence de 30° ≤ β ≤ 50° par rapport à la verticale.

16. Procédé d'échaudage d'animaux de boucherie tels que des cochons ou des chèvres dans un tunnel d'échaudage (2) dans lequel est diffusé un mélange de vapeur d'eau et d'eau,
**caractérisé en ce que**
le mélange de vapeur d'eau et d'eau est diffusé par des buses multiphasiques (30) disposées directement dans le tunnel d'échaudage (2) et alimentées directement aussi bien en eau qu'en vapeur d'eau.

17. Procédé selon la revendication 16,
**caractérisé en ce que**
les buses multiphasiques (30) diffusent un mélange sursaturé d'eau et de vapeur d'eau.

18. Procédé selon la revendication 16 ou 17,
**caractérisé en ce que**
la température du mélange diffusé par les buses multiphasiques (30) est réglée pour avoir à la sortie des buses multiphasiques un mélange à une température T₁ avec T₁ ≥ 100°C, en particulier T₁ ≥ 120°C, de préférence de 120°C ≤ T₁ ≤ 160°C.

19. Procédé selon l'une des revendications 16 à 18,
**caractérisé en ce que**
la température du mélange diffusé par les buses multiphasiques (30) est réglée et/ou les buses multiphasiques sont disposées dans le tunnel d'échaudage (2) pour avoir un mélange entrant en contact avec l'animal de boucherie (20) à une température T₂ en particulier de 55°C ≤ T₂ ≤ 70°C.

20. Procédé selon l'une des revendications 16 à 19,
**caractérisé en ce que**
les buses multiphasiques (30) sont disposées dans le tunnel d'échaudage (2) de manière à engendrer une circulation de l'atmosphère dans le tunnel d'échaudage, ce qui permet des conditions d'humidité d'air homogènes ou pour l'essentiel homogènes dans le tunnel d'échaudage.

21. Procédé selon l'une des revendications 16 à 20,
**caractérisé en ce que**
le tunnel d'échaudage (2) est exploité sans ventilateur.

22. Procédé selon l'une des revendications 16 à 21,
**caractérisé en ce qu'**
au moins la plupart des buses multiphasiques (30) sont alimentées en vapeur avec une surpression entre 2 et 6 bars.

23. Procédé selon l'une des revendications 16 à 22,
**caractérisé en ce qu'**
au moins la plupart des buses multiphasiques (30) sont alimentées en vapeur entre 120°C et 160°C.

24. Procédé selon l'une des revendications 16 à 23,
**caractérisé en ce qu'**
au moins la plupart des buses multiphasiques (30) sont alimentées en vapeur saturée ou sursaturée.

25. Procédé selon l'une des revendications 16 à 24,
**caractérisé en ce qu'**
au moins la plupart des buses multiphasiques (30) sont alimentées en eau avec une surpression de 0,2 bar environ.

26. Procédé selon l'une des revendications 16 à 25,
**caractérisé en ce qu'**
au moins la plupart des buses multiphasiques (30) sont alimentées en eau à température entre 20°C et 70°C.
